(19) Europäisches Patentamt
European Patent Office
Office européen des brevets

(11) EP 1 904 584 B1

(12) **EUROPEAN PATENT SPECIFICATION**

(45) Date of publication and mention of the grant of the patent:
**13.06.2012 Bulletin 2012/24**

(21) Application number: **06777438.0**

(22) Date of filing: **23.06.2006**

(51) Int Cl.:
*C09B 67/20* (2006.01) *C09B 69/10* (2006.01)
*C09D 11/00* (2006.01) *C09B 67/22* (2006.01)

(86) International application number:
**PCT/EP2006/063494**

(87) International publication number:
**WO 2007/006638 (18.01.2007 Gazette 2007/03)**

(54) **PIGMENT DISPERSIONS WITH POLYMERIC DISPERSANTS HAVING PENDING CHROMOPHORE GROUPS**

PIGMENTDISPERSIONEN MIT POLYMERISCHEN DISPERGIERMITTELN MIT HÄNGENDEN CHROMOPHORGRUPPEN

DSPERSIONS DE PIGMENTS AVEC DES DISPERSANTS POLYMERES A GROUPES CHROMOPHORES

(84) Designated Contracting States:
**AT BE BG CH CY CZ DE DK EE ES FI FR GB GR HU IE IS IT LI LT LU LV MC NL PL PT RO SE SI SK TR**

(30) Priority: **14.07.2005 EP 05106457**
**01.09.2005 US 713599 P**

(43) Date of publication of application:
**02.04.2008 Bulletin 2008/14**

(73) Proprietor: **AGFA GRAPHICS NV**
**2640 Mortsel (BE)**

(72) Inventors:
- **LOCCUFIER, Johan**
**B-2640 Mortsel (BE)**
- **DEROOVER, Geert**
**B-2640 Mortsel (BE)**
- **JAUNKY, Wojciech**
**B-2640 Mortsel (BE)**
- **GROENENDAAL, Lambertus**
**B-2640 Mortsel (BE)**

(74) Representative: **Goedeweeck, Rudi et al**
**Agfa Graphics N.V.**
**IP Department 3622**
**Septestraat 27**
**2640 Mortsel (BE)**

(56) References cited:
**EP-A- 0 763 378**
**EP-A- 0 763 580**
**WO-A-2005/056692**
**GB-A- 1 343 606**
**GB-A- 1 424 517**
**US-A- 4 664 709**
**US-A- 5 420 187**
**US-A1- 2004 194 665**



Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

Printed by Jouve, 75001 PARIS (FR)

## Description

### Technical field

The present invention relates to stable pigment dispersions and pigmented inkjet inks comprising colour pigments that are stabilized by polymeric dispersants having pending chromophore groups which exhibit a structural similarity with the colour pigment.

### Background art

Pigment dispersions are made using a dispersant. A dispersant is a substance for promoting the formation and stabilization of a dispersion of pigment particles in a dispersion medium. Dispersants are generally surface-active materials having an anionic, cationic or non-ionic structure. The presence of a dispersant substantially reduces the dispersing energy required. Dispersed pigment particles may have a tendency to re-agglomerate after the dispersing operation, due to mutual attraction forces. The use of dispersants also counteracts this re-agglomeration tendency of the pigment particles.

The dispersant has to meet particularly high requirements when used for inkjet inks. Inadequate dispersing manifests itself as increased viscosity in liquid systems, loss of brilliance and/or hue shifts. Moreover, particularly good dispersion of the pigment particles is required to ensure unimpeded passage of the pigment particles through the nozzles of the print head, which are usually only a few micrometers in diameter. In addition, pigment particle agglomeration and the associated blockage of the printer nozzles has to be avoided in the standby periods of the printer.

Polymeric dispersants contain in one part of the molecule so-called anchor groups, which adsorb onto the pigments to be dispersed. In a spatially separate part of the molecule, polymeric dispersants have polymer chains sticking out and whereby pigment particles are made compatible with the dispersion medium, i.e. stabilized.

The properties of polymeric dispersants depend on both the nature of the monomers and their distribution in the polymer. Polymeric dispersants obtained by randomly polymerizing monomers (e.g. monomers A and B polymerized into ABBAABAB) or by polymerizing alternating monomers (e.g. monomers A and B polymerized into ABABABAB) generally result in a poor dispersion stability. Improvements in dispersion stability were obtained using graft copolymer and block copolymer dispersants.

Graft copolymer dispersants consist of a polymeric backbone with side chains attached to the backbone.
CA 2157361 (DU PONT) discloses pigment dispersions made by using a graft copolymer dispersant with a hydrophobic polymeric backbone and hydrophilic side chains.

Block copolymer dispersants containing hydrophobic and hydrophilic blocks have been disclosed in numerous inkjet ink patents. US 5859113 (DU PONT) discloses an AB block copolymer dispersant with a polymeric A segment of polymerized glycidyl (meth)acrylate monomers reacted With an aromatic or aliphatic carboxylic acid, and a polymeric B segment of polymerized alkyl (meth)acrylate monomers having 1-12 carbon atoms in the alkyl group, hydroxy alkyl (meth)acrylate monomers.

In the design of polymeric dispersants for aqueous inkjet inks, the above mentioned anchor groups, which adsorb onto the pigments to be dispersed, are generally hydrophobic groups exhibiting an affinity for the pigment surface.

EP 0763580 A (TOYO INK) discloses an aqueous type pigment dispersing agent having a portion which has a high affinity with a pigment and which has at least one type selected from the group consisting of an organic dye, anthraquinone and acridone only at a terminal end or at both terminal ends of at least one aqueous polymer selected from the group consisting of an aqueous linear urethanic polymer and an aqueous linear acrylic polymer. EP 0763378 A (TOYO INK) discloses similar pigment dispersing agents for non-aqueous pigment dispersions.

US 5420187 (TOYO INK) discloses a pigment-dispersing agent obtained by polymerizing an addition-polymerizable monomer having an acidic functional group and other addition-polymerizable monomer in the presence of a polymerization initiator, the polymerization initiator being a diazotization product prepared by diazotizing at least one compound selected from the group consisting of an anthraquinone derivative having an aromatic amino group, an acridone derivative having an aromatic amino group and an organic dyestuff having an aromatic amino group. In this pigment-dispersing agent, the colorant is located in the polymeric backbone itself.

US 2003044707 (TOYO INK) discloses a dispersing agent for a pigment, comprising a specific compound having a structure wherein a phthalocyanine type molecular skeleton which is adsorptive on the pigment and an oligomer unit or polymer unit which prevents re-agglomeration of the pigment to bring out the effect of dispersion are covalently bonded, and having affinity for a medium or a solvent.

US 2004194665 (BASF) relates to pigment dispersions comprising for a pigment dispersant a substituted perylene derivative in which the substituent has a sterically stabilizing and/or electrostatically stabilizing effect. The perylene derivatives are used to disperse pigments with a quite different chemical structure such as quinacridone pigments.

WO 2005056692 (SUN CHEMICAL) discloses highly concentrated colorant dispersions comprising: (a) at least about 45 wt. % of a pigment; and (b) a polymeric colored dispersant having the structure A- $(B\text{-}X)_n$, wherein: A is an organic chromophore; B is a covalently bonded linking moiety; X is a branched or linear $C_{50}$-$C_{200}$ polymeric covalently linked hydrocarbon; and n is an integer from 1 to 4. The chromophore group A is present in the polymeric dispersant either as an end group or in the polymeric backbone. The polymeric dispersants are used for dispersing pigments with quite different chemical structure compared to the chromophore group A.

For consistent image quality, the inkjet ink requires a dispersion stability capable of dealing with high temperatures (above 60°C) during transport of the ink to a customer and changes in the dispersion medium of the inkjet ink during use, for example, evaporation of solvent and increasing concentrations of humectants, penetrants and other additives. Quinacridone pigments are very suitable for manufacturing magenta inkjet inks but the stability remains problematic.

Therefore, it is highly desirable to be able to manufacture stable pigmented magenta inkjet inks based on quinacridone pigments using a polymeric dispersant obtained by simple synthesis.

## Objects of the invention

It is an object of the present invention to provide magenta inkjet inks using a polymeric dispersant obtainable by uncomplicated synthesis.

It is a further object of the present invention to provide magenta inkjet inks based on quinacridone pigments with high dispersion stability.

It is a further object of the present invention to provide inkjet inks producing images of high image quality with a high optical density.

Further objects of the invention will become apparent from the description hereinafter.

## Summary of the invention

It has been surprisingly found that magenta inkjet inks based on quinacridone pigments with high optical density and high stability were obtained using a coloured polymeric dispersant having pending chromophore groups exhibiting a structural similarity with the quinacridone pigment on a homopolymer backbone.

Objects of the present invention have been realized with a pigment dispersion comprising a colour pigment represented by Formula (I)

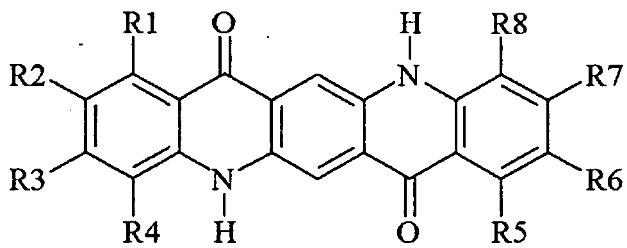

Formula (I)

wherein,
R1 to R8 are independently selected from the group consisting of hydrogen, an alkyl group and a halogen; and
a polymeric dispersant having via a linking group covalently linked to its polymeric backbone at least one pending chromophore group wherein the at least one pending chromophore group is a chromophore group occurring as a side group on the polymeric backbone and not a group in the polymeric backbone itself or occurring solely as an end group of the polymeric backbone,
and the at least one pending chromophore group is represented by the Formula (II)

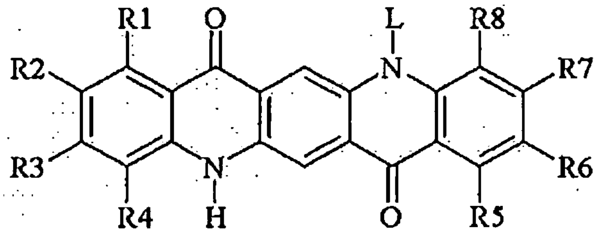

Formula (II)

wherein,
L is a linking group forming a covalent bond with the polymeric backbone;
and
R1 to R8 are independently selected from the group consisting of hydrogen, an alkyl group and a halogen.

Objects of the present invention have also been realized with a method for preparing a pigment dispersion as defined by claim 11.

**Disclosure of the invention**

Definitions

The term "colorant", as used in disclosing the present invention, means dyes and pigments.

The term "dye", as used in disclosing the present invention, means a colorant having a solubility of 10 mg/L or more in the medium in which it is applied and under the ambient conditions pertaining.

The term "pigment" is defined In DIN 55943, herein Incorporated by reference, as a colouring agent that is practically insoluble in the application medium under the pertaining ambient conditions, hence having a solubility of less than 10 mg/L therein.

The term "chromophore group", as used in disclosing the present invention, means a group with an absorption maximum between 300 nm and 2000 nm.

The term "pending chromophore group", as used in disclosing the present invention, means a chromophore group occurring as a side group on the polymeric backbone and not a group in the polymeric backbone itself or occurring solely as an end group of the polymeric backbone.

The term "C.I." is used in disclosing the present application as an abbreviation for Colour Index.

The term "actinic radiation" as used in disclosing the present invention, means electromagnetic radiation capable of initiating photochemical reactions.

The term "DP" is used in disclosing the present application as an abbreviation for degree of polymerization, i.e. the number of structural units (monomers) in the average polymer molecule.

The term "PD" Is used in disclosing the present application as an abbreviation for polydispersity of a polymer.

The term "dispersion", as used in disclosing the present invention, means an intimate mixture of at least two substances, one of which, called the dispersed phase or colloid, is uniformly distributed in a finely divided state through the second substance, called the dispersion medium.

The term "polymeric dispersant", as used in disclosing the present invention, means a substance for promoting the formation and stabilization of a dispersion of one substance in a dispersion medium.

The term "copolymer", as used in disclosing the present invention means a macromolecule in which two or more different species of monomer are incorporated into a polymer chain.

The term "block copolymer", as used in disclosing the present invention, means a copolymer in which the monomers occur in relatively long alternate sequences in a chain.

The term "spectral separation factor" as used in disclosing the present invention means the value obtained by calculating the ratio of the maximum absorbance $A_{max}$ (measured at wavelength $\lambda_{max}$) over the reference absorbance $A_{ref}$ determined at a higher wavelength $\lambda_{ref}$.

The abbreviation "SSF" is used in disclosing the present invention for spectral separation factor.

The term "alkyl" means all variants possible for each number of carbon atoms in the alkyl group i.e. for three carbon atoms: n-propyl and isopropyl; for four carbon atoms: n-butyl, isobutyl and tertiary-butyl; for five carbon atoms: n-pentyl, 1,1-dimethyl-propyl, 2,2-dimethylpropyl and 2-methyl-butyl etc.

The term "acyl group" means -(C=O)-aryl and -(C=O)-alkyl groups.

The term "aliphatic group" means saturated straight chain, branched chain and alicyclic hydrocarbon groups.

The term "unsaturated aliphatic group" means straight chain, branched chain and alicyclic hydrocarbon groups

which contain at least one double or triple bond.

The term "aromatic group" as used in disclosing the present invention means an assemblage of cyclic conjugated carbon atoms, which are characterized by large resonance energies, e.g. benzene, naphthalene and anthracene.

The term "alicyclic hydrocarbon group" means an assemblage of cyclic carbon atoms, which do not form an aromatic group, e.g. cyclohexane.

The term "heteroaromatic group" means an aromatic group wherein at least one of the cyclic conjugated carbon atoms is replaced by a non-carbon atom such as a nitrogen atom, a sulphur atom, a phosphorous atom, selenium atom and a tellurium atom.

The term "heterocyclic group" means an alicyclic hydrocarbon group wherein at least one of the cyclic carbon atoms is replaced by an oxygen atom, a nitrogen atom, a phosphorous atom, a silicon atom, a sulphur atom, a selenium atom or a tellurium atom.

Pigmented inkjet ink

The pigmented inkjet ink according to the present invention contains at least three components: (i) a colour pigment, (ii) a polymeric dispersant, and (iii) a dispersion medium.

The pigmented inkjet ink according to the present invention may further contain at least one surfactant.

The pigmented inkjet ink according to the present invention may further contain at least one biocide.

The pigmented inkjet ink according to the present invention may further contain at least one humectant and/or penetrant.

The pigmented inkjet ink according to the present invention may further contain at least one pH adjuster.

The pigmented inkjet ink according to the present invention may contain at least one humectant to prevent the clogging of the nozzle, due to its ability to slow down the evaporation rate of ink.

The viscosity of the pigmented inkjet ink according to the present invention is preferably lower than 100 mPa.s, more preferably lower than 30 mPa.s, and most preferably lower than 15 mPa.s at a shear rate of 100 $s^{-1}$ and a temperature between 20 and 110°C.

The pigmented inkjet ink according to the present invention is preferably an aqueous, a solvent based or an oil based pigmented inkjet ink.

The pigmented inkjet ink according to the present invention may be curable and may contain monomers, oligomers and/or prepolymers possessing different degrees of functionality. A mixture including combinations of mono-, di-, tri- and/or higher functionality monomers, oligomers or prepolymers may be used. The initiator typically initiates the polymerization reaction. A catalyst called an initiator for initiating the polymerization reaction may be included in the curable pigmented inkjet ink. The initiator can be a thermal initiator, but is preferably a photo-initiator. The photo-initiator requires less energy to activate than the monomers, oligomers and/or prepolymers to form the polymer. The photo-initiator suitable for use in the curable fluid may be a Norrish type I initiator, a Norrish type II initiator or a photo-acid generator.

Polymeric dispersants

The polymeric dispersant used in the pigmented inkjet ink according to the present invention contains one or more pending chromophore groups linked by a linking group to a polymeric backbone.

The polymeric dispersant used in the pigmented inkjet ink according to the present invention preferably has a polymeric backbone with a polymerization degree DP between 5 and 1000, more preferably between 10 and 500 and most preferably between 10 and 100.

The polymeric dispersant used in the pigmented inkjet ink according to the present invention preferably has a number average molecular weight Mn between 500 and 30000, more preferably between 1500 and 10000.

The polymeric dispersant has preferably a polymeric dispersity PD smaller than 2, more preferably smaller than 1.75 and most preferably smaller than 1.5.

The polymeric dispersant is used in the pigmented inkjet ink in an amount of 5 to 600 wt%, preferably 10 to 100 wt% based on the weight of the pigment.

Polymeric backbones

The polymeric backbone of the polymeric dispersant used in the pigmented inkjet ink according to the present invention is required for the compatibility between polymeric dispersant and dispersion medium.

In a preferred embodiment the polymeric backbone of the polymeric dispersant used in the pigmented inkjet ink according to the present invention is a homopolymer.

It is not required that the polymeric backbone has an affinity for the pigment. For example, the polymeric

backbone of a dispersant for aqueous inkjet inks can be a homopolymer of acrylic acid monomers. A homopolymer is generally incapable of dispersing pigments, but the presence of a pending chromophore group exhibiting a similarity with the pigment ensures an adequate affinity between polymeric dispersant and pigment surface.

For aqueous based inkjet inks, the homopolymer is preferably a polymer of (meth)acrylic acid monomers or macromonomers such as mPEG (meth)acrylates. For solvent based inkjet inks, the homopolymer is preferably a polymer of alkyl or functional alkyl meth(acrylates) and macromonomers such as polyesters (meth)acrylates.

In one embodiment the polymeric dispersant can be prepared by copolymerization with a monomer containing a chromophore group. It was observed that the pigment-based monomers containing a chromophore group were stable in the presence of radicals. This polymerization method offers the advantage of well-controlled design of polymeric dispersants for a wide variety of dispersion media. Classical free radical polymerization (FRP) techniques for preparing statistical copolymers in a one reactor polymerization and ATRP for preparing block copolymers were possible to prepare the polymeric dispersant. Using this preparation method the polymeric backbone can also be a statistical copolymer, a block copolymer, a graft copolymer, a comb polymer or an alternating copolymer. Also suitable as polymeric backbone is a gradient copolymer as disclosed by MATYJASZEWSKI, K., et al. Atom Transfer Radical Polymerization. Chem. Reviews 2001. vol. 101, p.2921-2990. Sometimes it can be useful to include a number of monomers with a high affinity for the pigment surface to enhance certain properties of the inks, e.g. dispersion stability. For example, the polymeric backbone of a dispersant for aqueous inkjet inks may contain hydrophobic monomers to increase the affinity of the polymeric dispersant for the pigment surface. However in enhancing this affinity for the pigment surface, however care should be taken that enough of the polymeric backbone sticks out to make the pigment particles compatible with the dispersion medium. In graft copolymers the use of grafted chains of methoxypolyethyleneglycol (MPEG) has been found to be very advantageous in aqueous inkjet ink. For solvent-based inkjet inks the use of grafted chains of polyester were found to be very advantageous. A preferred MPEG macromonomer is BISOMER™ MPEG 350MA (methoxypolyethyleneglycol methacrylate) from LAPORTE INDUSTRIES LTD.

Preferred grafted chains of polyester in non-aqueous inkjet inks are derived from δ-valerolactone, ε-caprolactone and/or $C_1$ to $C_4$ alkyl substituted ε-caprolactone. The grafted chains can be introduced into the polymeric dispersant through CDI coupling of a polyester-OH chain with a carboxylic acid group of, for example, an acrylic acid monomer in the polymeric backbone of the dispersant. However, it was observed that grafting by free radical polymerization, wherein the polyester chain already coupled to the carboxylic acid group of an acrylic acid monomer was used as a macromonomer, not only resulted in better dispersion quality and stability of the inkjet inks but also were obtained by a more reproducible polymeric dispersant synthesis requiring less purification.

For radiation curable inks with the dispersion medium comprising or consisting of monomers and/or oligomers, many (co)polymers having good solubility in the dispersion medium were found to be suitable for the polymer backbone of the polymeric dispersant.

The copolymeric backbone consists preferably of no more than 2 or 3 monomer species.

The monomers and/or oligomers used to prepare the polymeric dispersant used in the pigmented inkjet ink according to the present invention can be any monomer and/or oligomer found in the Polymer Handbook, Vol. 1 + 2. 4th edition. Edited by J. BRANDRUP, et al. Wiley-Interscience , 1999.

Suitable examples of monomers include: acrylic acid, methacrylic acid, maleic acid, acryloyloxybenzoic acid and methacryloyloxybenzoic acid (or their salts), maleic anhydride; alkyl(meth)acrylates (linear, branched and cycloalkyl) such as methyl(meth)acrylate, n-butyl(meth)acrylate, tert-butyl(meth)acrylate, cyclohexyl(meth)acrylate and 2-ethylhexyl (meth)acrylate; aryl(meth)acrylates such as benzyl(meth)acrylate and phenyl(meth)acrylate; hydroxyalkyl(meth)acrylates such as hydroxyethyl(meth)acrylate and hydroxypropyl(meth)acrylate; (meth)acrylates with other types of functionalities (e.g. oxirane, amino, fluoro, polyethylene oxide, phosphate-substituted) such as glycidyl (meth)acrylate, dimethylaminoethyl(meth)acrylate, trifluoroethyl acrylate, methoxypolyethyleneglycol (meth)acrylate and tripropyleneglycol(meth)acrylate phosphate; allyl derivatives such as allyl glycidyl ether; styrenics such as styrene, 4-methylstyrene, 4-hydroxystyrene, and 4-acetoxystyrene; (meth)acrylonitrile; (meth)acrylamides (including N-mono and N,N-disubstituted) such as N-benzyl (meth)acrylamide; maleimides such as N-phenyl maleimide, N-benzyl maleimide and N-ethyl maleimide; vinyl derivatives such as vinylcaprolactam, vinylpyrrolidone, vinylimidazole, vinylnaphthalene and vinyl halides; vinylethers such as vinylmethyl ether; and vinylesters of carboxylic acids such as vinylacetate and vinylbutyrate.

Linking groups

The pending chromophore group is linked by a linking group to the polymeric backbone. The linking group contains at least one carbon atom, one nitrogen atom, one oxygen atom, one phosphorous atom, one silicon atom, one sulphur atom, one selenium atom or one tellurium atom.

The linking group consists of all atoms between the polymeric backbone and the first atom of the aromatic group by which the pending chromophore group is linked to the polymeric backbone.

The linking group has preferably a molecular weight smaller than the molecular weight of the pending chromophore group, more preferably the linking group has a molecular weight smaller than 80% than the molecular weight of the pending chromophore group, and most preferably the linking group has a molecular weight smaller than 50% than the molecular weight of the pending chromophore group.

In one embodiment, the linking group is the result of modification of the polymeric backbone with a chromophore having a reactive group. Suitable reactive groups on the chromophore include thiol groups, primary or secondary amino groups, carboxylic acid groups or salts thereof, hydroxyl groups, isocyanate groups and epoxy groups. Typical covalent bonds formed by reaction of the chromophore with the polymeric backbone include an amide, an ester, a urethane, an ether and a thioether.

In another embodiment, the polymeric dispersant is prepared by copolymerizing monomers of the polymeric backbone and monomers containing a chromophore group. In this case the linking group is already present in the monomer. This polymerization method offers the advantage of well-controlled design of polymeric dispersants for a wide variety of dispersion media.

Pending chromophore groups

The pending chromophore group of the polymeric dispersant used in the pigmented inkjet ink according to the present invention exhibits a similarity with the colour pigment of the pigmented inkjet ink. Preferably the pending chromophore group has a molecular weight smaller than 93% of the molecular weight of the colour pigment.

The pending chromophore group of the polymeric dispersant used in the pigmented inkjet ink according to the present invention may be represented by Formula (II)

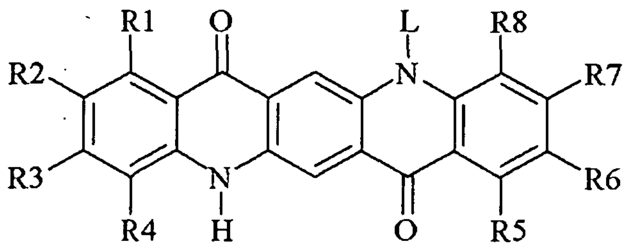

Formula (II)

wherein,
L is a linking group forming a covalent bond with said polymeric backbone;
and
R1 to R8 are independently selected from the group consisting of hydrogen, an alkyl group and a halogen.

Preferably at most 45 % of the monomer units of the polymeric backbone of the polymeric dispersant used in the pigmented inkjet ink according to the present invention have a pending chromophore group.

Preferably at least 2 % of the monomer units of said polymeric backbone of the polymeric dispersant used in the pigmented inkjet ink according to the present invention have a pending chromophore group.

Preferably between 5 and 30 % of the monomer units of the polymeric backbone of the polymeric dispersant used in the pigmented inkjet ink according to the present invention have a pending chromophore group.

More preferably between 10 and 30 % of the monomer units of the polymeric backbone of the polymeric dispersant used in the pigmented inkjet ink according to the present invention have a pending chromophore group.

The pending chromophore group is preferably present in the range of 1 to 30 percentage, more preferably in the range 5 to 20 percentage based on the monomeric units of the polymeric backbone. Polymeric dispersants having a homopolymer or statistical copolymer as polymeric backbone with more than 45 percent of the monomeric units of the polymeric backbone having pending chromophore groups exhibit problems of solubility of the polymeric dispersant in the dispersion medium and deterioration of the dispersing properties due to the fact that the dispersant would go flat on the pigment surface. However, in the case of a well-defined block-copolymer a good dispersion can be obtained with 50 percent of the monomeric units of the polymeric backbone having pending chromophore groups. This well-defined block-copolymer preferably has at least one block containing no pending chromophore groups.

In some cases, the dispersion stability of the pigment according to the present invention can be further improved by increasing the number of pending chromophore groups in the polymeric dispersant. In a preferred embodiment, two, three or more pending chromophore groups are located in close proximity of each other on the polymeric backbone. Close proximity means preferably less than 50 monomeric units, more preferably less than 20 monomeric units and most preferably less than 10 monomeric units between two pending chromophore groups. It is believed that the dispersion

stability improvement by more pending chromophore groups is due to the dynamic character of the attaching and detaching of the pending chromophore group to the pigment surface. By increasing the number of pending chromophore groups, the probability that all pending chromophore groups will be in a "detached state" at the same time is expected to decrease.

Synthesis

The polymerization process may be a condensation polymerization, in which the chain growth is accompanied by elimination of small molecules such as water or methanol or an addition polymerization, in which the polymer is formed without the loss of other materials. Polymerization of the monomers can be conducted according to any conventional method such as bulk polymerization and semi-continuous polymerization.

The synthesis is preferably performed by a controlled radical polymerization (CRP) technique. Suitable polymerization techniques include ATRP (atom transfer radical polymerization), RAFT (reversible addition-fragmentation chain transfer polymerization), MADIX (reversible addition-fragmentation chain transfer process, using a transfer active xanthate), catalytic chain transfer (e.g. using cobalt complexes), GTP (group transfer polymerization), or nitroxide (e.g. TEMPO) mediated polymerizations.

In one embodiment the polymeric dispersant used in the pigmented inkjet ink according to the present invention is prepared by a post-polymerization modification with a chromophore. The chromophore is covalently linked to the polymer backbone of the polymeric dispersant. The post-polymerization modification can be any suitable reaction, e.g. an esterification reaction.

An esterification reaction suitable for post-polymerization modification can be performed using N,N'-carbonyldiimidazole (CDI). In a first step, the carboxylic moieties of the polymer are activated with CDI to form an intermediate imidazole, which is then esterified with the chromophore having a reactive hydroxyl group. The completion of the first step can be observed when the $CO_2$ degassing stops.

Synthesis scheme with R representing the chromophore group:

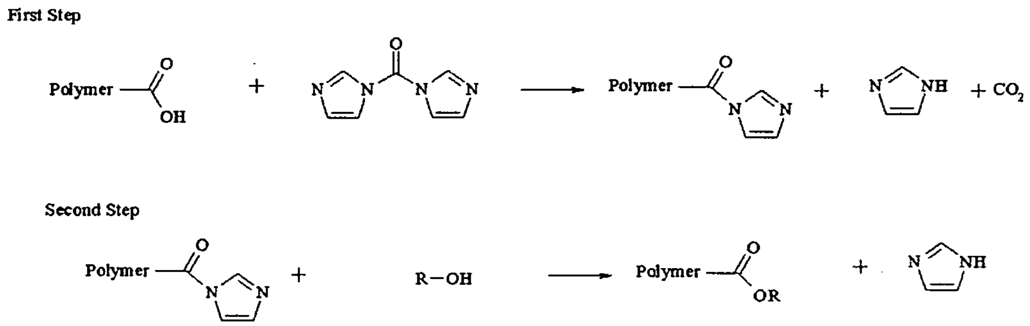


Side products of the reaction can be removed by acidifying the aqueous medium used for precipitation of the polymer (hydrolysis of remaining activated esters and protonation of imidazole that remains in water, in this way achieving the separation from the polymer). If the final modified polymer is water-soluble (e.g. modified homopolymer of acrylic acid), a dialysis can be performed to purify the polymer.

Monomers with a chromophore group

The monomer with a chromophore group for the preparation of the polymeric dispersant used in the pigmented inkjet ink according to the present invention can be represented by the general formula:

A-L-B

wherein,
A represents an ethylenically unsatured polymerisable functional group;
L represents a divalent linking group; and
B represents a substituted or unsubstituted quinacridone moiety.

In a preferred embodiment, the ethylenically unsatured polymerisable group is selected from the group consisting of a styrene, an acrylate, a methacrylate, an acrylamide, a methacrylamide, a maleimide, a vinyl ester and a vinyl ether.

A suitable monomer with a substituted or unsubstituted quinacridone moiety can be represented by Formula

(GEN-I)

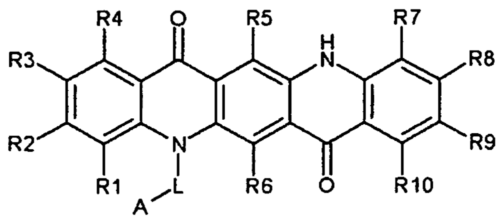

Formula (GEN-I)

wherein,
L represents a divalent linking group;
A represents an ethylenically unsatured polymerizable functional group;
and R1 to R10 are independently selected from the group consisting of hydrogen, an alkyl group and a halogen.

Suitable monomers according to Formula (GEN-I) include the monomers disclosed in Table 1.

Table 1

| | |
|---|---|
| 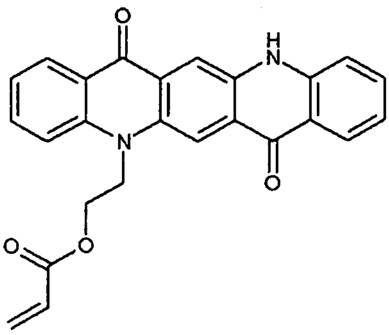 | 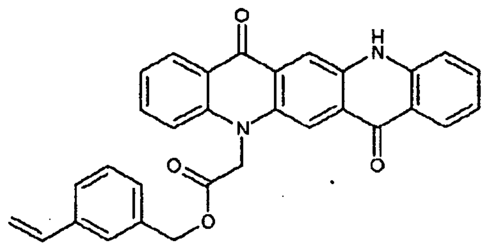 |
| 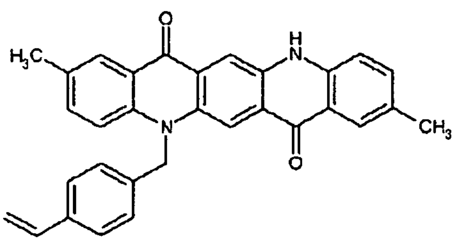 | 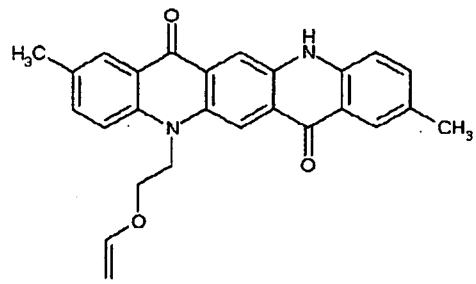 |

| | |
|---|---|
| 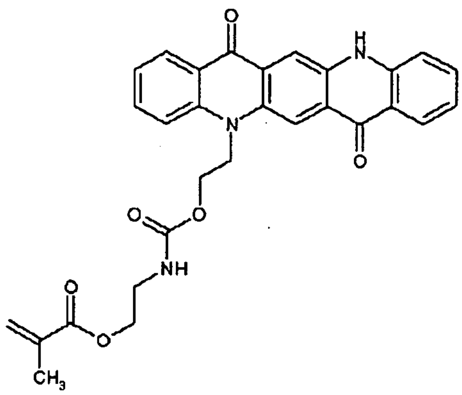 | 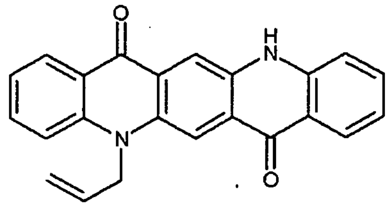 |
| 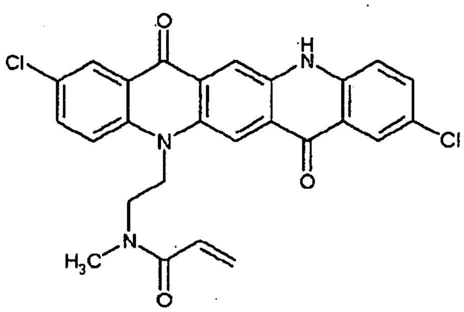 | 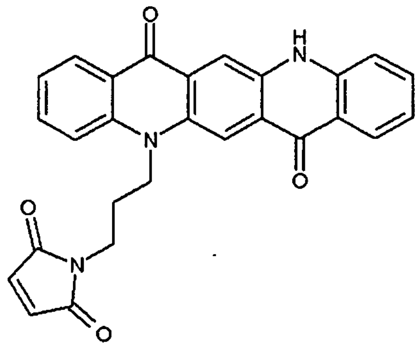 |
| 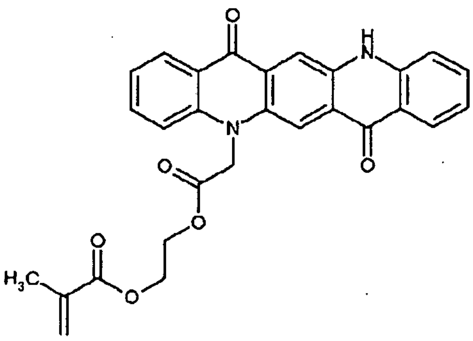 | 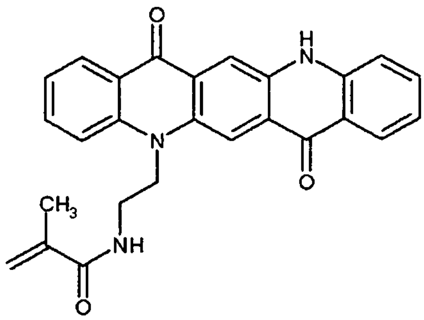 |

<u>Colour pigments</u>

The colour pigment may be chosen from those disclosed by HERBST, Willy, et al. Industrial Organic Pigments, Production, Properties, Applications. 3rdth edition. Wiley - VCH , 2004. ISBN 3527305769.

Particular preferred colour pigments include C.I. Pigment Red 122, 192, 202, 207 and 209.

A particular preferred colour pigment is C.I. Pigment Violet 19.

The pigment particles in the pigmented inkjet ink should be sufficiently small to permit free flow of the ink through the inkjet-printing device, especially at the ejecting nozzles. It is also desirable to use small particles for maximum colour strength and to slow down sedimentation.

The average particle size of the pigment in the pigmented inkjet ink should be between 0.005 and 15 μm. Preferably, the average pigment particle size is between 0.005 and 5 μm, more preferably between 0.005 and 1 μm, particularly preferably between 0.005 and 0.3 μm and most preferably between 0.040 and 0.150 μm. Larger pigment particle sizes may be used as long as the objectives of the present invention are achieved.

The pigment is used in the pigmented inkjet ink in an amount of 0.1 to 20 wt%, preferably 1 to 10 wt% based

on the total weight of the pigmented inkjet ink.

Dispersion media

The dispersion medium used in the pigmented inkjet ink according to the present invention is a liquid. The dispersion medium may consist of water and/or organic solvent(s).

If the pigmented inkjet ink is a curable pigmented inkjet ink, water and/or organic solvent(s) are replaced by one or more monomers and/or oligomers to obtain a liquid dispersion medium. Sometimes, it can be advantageous to add a small amount of an organic solvent to improve the dissolution of the dispersant. The content of organic solvent should be lower than 20 wt% based on the total weight of the pigmented inkjet ink.

Suitable organic solvents include alcohols, aromatic hydrocarbons, ketones, esters, aliphatic hydrocarbons, higher fatty acids, carbitols, cellosolves, higher fatty acid esters. Suitable alcohols include, methanol, ethanol, propanol and 1-butanol, 1-pentanol, 2-butanol, t.-butanol. Suitable aromatic hydrocarbons include toluene, and xylene. Suitable ketones include methyl ethyl ketone, methyl isobutyl ketone, 2,4-pentanedione and hexafluoroacetone. Also glycol, glycolethers, N-methylpyrrolidone, N,N-dimethylacetamid, N, N-dimethylformamid may be used.

Suitable monomers and oligomers can be found in Polymer Handbook, Vol. 1 + 2. 4thth edition. Edited by J. BRANDRUP, et al. Wiley-Interscience, 1999.

Suitable examples of monomers for curable pigmented inkjet inks include:

acrylic acid, methacrylic acid, maleic acid (or their salts), maleic anhydride;
alkyl(meth)acrylates (linear, branched and cycloalkyl) such as methyl(meth)acrylate, n-butyl(meth)acrylate, tert-butyl(meth)acrylate, cyclohexyl(meth)acrylate and 2-ethylhexyl(meth)acrylate;
aryl(meth)acrylates such as benzyl(meth)acrylate and phenyl(meth)acrylate; hydroxyalkyl(meth)acrylates such as hydroxyethyl(meth)acrylate and hydroxypropyl(meth)acrylate; (meth)acrylates with other types of functionalities (e.g. oxirane, amino, fluoro, polyethylene oxide, phosphate-substituted) such as glycidyl (meth)acrylate, dimethylaminoethyl(meth)acrylate, trifluoroethyl acrylate, methoxypolyethyleneglycol (meth)acrylate and
tripropyleneglycol(meth)acrylate phosphate; allyl derivatives such as allyl glycidyl ether; styrenics such as styrene, 4-methylstyrene, 4-hydroxystyrene, and 4-acetoxystyrene; (meth)acrylonitrile;
(meth)acrylamides (including N-mono and N,N-disubstituted) such as N-benzyl (meth)acrylamide; maleimides such as N-phenyl maleimide, N-benzyl maleimide and N-ethyl maleimide; vinyl derivatives such as vinylcaprolactam, vinylpyrrolidone, vinylimidazole, vinylnaphthalene and vinyl halides; vinylethers such as vinylmethyl ether; and vinylesters of carboxylic acids such as vinylacetate and vinylbutyrate.

A combination of monomers, oligomers and/or prepolymers may also be used. The monomers, oligomers and/or prepolymers may possess different degrees of functionality, and a mixture including combinations of mono-, di-, tri-and higher functionality monomers, oligomers and/or prepolymers may be used.

For oil based inkjet inks the dispersion medium can be any suitable oil including aromatic oils, paraffinic oils, extracted paraffinic oils, naphthenic oils, extracted napthenic oils, hydrotreated light or heavy oils, vegetable oils and derivatives and mixtures thereof. Paraffinic oils can be normal paraffin types (octane and higher alkanes), isoparaffins (isooctane and higher iso-alkanes) and cycloparaffins (cyclooctane and higher cycloalkanes) and mixtures of paraffin oils.

Surfactants

The pigmented inkjet ink according to the present invention may contain at least one surfactant. The surfactant (s) can be anionic, cationic, non-ionic, or zwitter-ionic and are usually added in a total quantity less than 20 wt% based on the total weight of the pigmented inkjet ink and particularly in a total less than 10 wt% based on the total weight of the pigmented inkjet ink.

Suitable surfactants for the pigmented inkjet ink according to the present invention include fatty acid salts, ester salts of a higher alcohol, alkylbenzene sulphonate salts, sulphosuccinate ester salts and phosphate ester salts of a higher alcohol (for example, sodium dodecylbenzenesulphonate and sodium dioctylsulphosuccinate), ethylene oxide adducts of a higher alcohol, ethylene oxide adducts of an alkylphenol, ethylene oxide adducts of a polyhydric alcohol fatty acid ester, and acetylene glycol and ethylene oxide adducts thereof (for example, polyoxyethylene nonylphenyl ether, and SURFYNOL™ 104, 104H, 440, 465 and TG available from AIR PRODUCTS & CHEMICALS INC.

Biocides

Suitable biocides for the pigmented inkjet ink of the present invention include sodium dehydroacetate, 2-phenoxyethanol, sodium benzoate, sodium pyridinethion-1-oxide, ethyl p-hydroxybenzoate and 1,2-benzisothiazolin-3-one

and salts thereof.

Preferred biocides are Bronidox™ available from HENKEL and Proxel™ GXL available from AVECIA.

A biocide is preferably added in an amount of 0.001 to 3 wt%, more preferably 0.01 to 1.00 wt%, each based on the total weight of the pigmented inkjet ink.

pH adjusters

The pigmented inkjet ink according to the present invention may contain at least one pH adjuster. Suitable pH adjusters include NaOH, KOH, $NEt_3$, $NH_3$, HCl, $HNO_3$ , $H_2SO_4$ and (poly)alkanolamines such as triethanolamine and 2-amino-2-methyl-1-propanol. Preferred pH adjusters are NaOH and $H_2SO_4$.

Humectants/Penetrants

Suitable humectants include triacetin, N-methyl-2-pyrrolidone, glycerol, urea, thiourea, ethylene urea, alkyl urea, alkyl thiourea, dialkyl urea and dialkyl thiourea, diols, including ethanediols, propanediols, propanetriols, butanediols, pentanediols, and hexanediols; glycols, including propylene glycol, polypropylene glycol, ethylene glycol, polyethylene glycol, diethylene glycol, tetraethylene glycol, and mixtures and derivatives thereof. Preferred humectants are triethylene glycol mono butylether, glycerol and 1,2-hexanediol. The humectant is preferably added to the inkjet ink formulation in an amount of 0.1 to 40 wt% of the formulation, more preferably 0.1 to 10 wt% of the formulation, and most preferably approximately 4.0 to 6.0 wt%.

Preparation of a pigmented inkjet ink

The pigmented inkjet ink according to the present invention may be prepared by precipitating or milling the pigment in the dispersion medium in the presence of the polymeric dispersant.

Mixing apparatuses may include a pressure kneader, an open kneader, a planetary mixer, a dissolver, and a Dalton Universal Mixer. Suitable milling and dispersion apparatuses are a ball mill, a pearl mill, a colloid mill, a high-speed disperser, double rollers, a bead mill, a paint conditioner, and triple rollers. The dispersions may also be prepared using ultrasonic energy.

Many different types of materials may be used as milling media, such as glasses, ceramics, metals, and plastics. In a preferred embodiment, the grinding media can comprise particles, preferably substantially spherical in shape, e.g. beads consisting essentially of a polymeric resin or yttrium stabilized zirconium beads.

In the process of mixing, milling and dispersion, each process is preferably performed with cooling to prevent build up of heat.

In the process of mixing, milling and dispersion, each process is performed with cooling to prevent build up of heat, and for radiation curable inkjet inks as much as possible under light conditions in which actinic radiation has been substantially excluded.

The inkjet ink according to the present invention may contain more than one pigment, the inkjet ink may be prepared using separate dispersions for each pigment, or alternatively several pigments may be mixed and co-milled in preparing the dispersion.

The dispersion process can be carried out in a continuous, batch or semi-batch mode.

The preferred amounts and ratios of the ingredients of the mill grind will vary widely depending upon the specific materials and the intended applications. The contents of the milling mixture comprise the mill grind and the milling media. The mill grind comprises pigment, polymeric dispersant and a liquid carrier such as water. For inkjet inks, the pigment is usually present in the mill grind at 1 to 50 wt%, excluding the milling media. The weight ratio of pigment over polymeric dispersant is 20:1 to 1:2.

The milling time can vary widely and depends upon the pigment, mechanical means and residence conditions selected, the initial and desired final particle size, etc. In the present invention pigment dispersions with an average particle size of less than 100 nm may be prepared.

After milling is completed, the milling media is separated from the milled particulate product (in either a dry or liquid dispersion form) using conventional separation techniques, such as by filtration, sieving through a mesh screen, and the like. Often the sieve is built into the mill, e.g. for a bead mill. The milled pigment concentrate is preferably separated from the milling media by filtration.

In general it is desirable to make the inkjet inks in the form of a concentrated mill grind, which is subsequently diluted to the appropriate concentration for use in the inkjet printing system. This technique permits preparation of a greater quantity of pigmented ink from the equipment. By dilution, the inkjet ink is adjusted to the desired viscosity, surface tension, colour, hue, saturation density, and print area coverage for the particular application.

Spectral Separation Factor

The spectral separation factor SSF was found to be an excellent measure to characterize a pigmented inkjet ink, as it takes into account properties related to light-absorption (e.g. wavelength of maximum absorbance $\lambda_{max}$, shape of the absorption spectrum and absorbance-value at $\lambda_{max}$) as well as properties related to the dispersion quality and stability.

A measurement of the absorbance at a higher wavelength gives an indication on the shape of the absorption spectrum. The dispersion quality can be evaluated based on the phenomenon of light scattering induced by solid particles in solutions. When measured in transmission, light scattering in pigment inks may be detected as an increased absorbance at higher wavelengths than the absorbance peak of the actual pigment. The dispersion stability can be evaluated by comparing the SSF before and after a heat treatment of e.g. a week at 80°C.

The spectral separation factor SSF of the ink is calculated by using the data of the recorded spectrum of an ink solution or a jetted image on a substrate and comparing the maximum absorbance to the absorbance at a higher reference wavelength $\lambda_{ref}$. The spectral separation factor is calculated as the ratio of the maximum absorbance $A_{max}$ over the absorbance $A_{ref}$ at a reference wavelength.

$$SSF = \frac{A_{max}}{A_{ref}}$$

The SSF is an excellent tool to design inkjet ink sets with large colour gamut. Often inkjet ink sets are now commercialized, wherein the different inks are not sufficiently matched with each other. For example, the combined absorption of all inks does not give a complete absorption over the whole visible spectrum, e.g. "gaps" exist between the absorption spectra of the colorants. Another problem is that one ink might be absorbing in the range of another ink. The resulting colour gamut of these inkjet ink sets is low or mediocre.

EXAMPLES

Materials

All materials used in the following examples were readily available from standard sources such as Aldrich Chemical Co. (Belgium) and Acros (Belgium) unless otherwise specified.
The water used was deionized water.

VERSICOL E5 was obtained from ALLIED COLLOIDS MANUFACTURING CO LTD as a 25% wt solution of pAA in water. This solution was freeze-dried to afford the dry powder of polyacrylic acid that was subsequently used for modification reactions. Proxel™ Ultra 5 from AVECIA.
Surfynol™ 104H from AIR PRODUCTS & CHEMICALS INC. Glycerol from ACROS.
1,2-propanediol from CALDIC CHEMIE NV.
PR122 is the abbreviation for C.I. Pigment Red 122 for which Ink jet magenta E02VP2621 from CLARIANT was used.
PV19 is the abbreviation for C.I. Pigment Violet 19 for which Hostaperm™ Red E5B02 from CLARIANT was used.

The chemical structure of the colour pigments used is listed in Table 2.

**Table 2**

| | |
|---|---|
| PR122 | 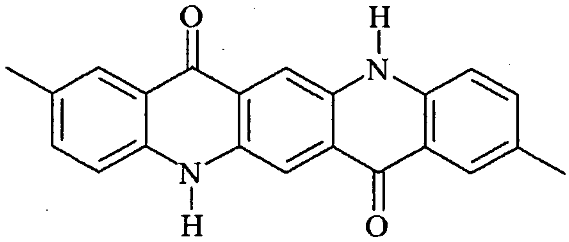 |
| PV19 | 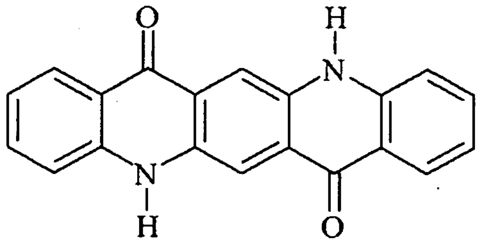 |

Measurement methods

1. Measurement of SSF

The spectral separation factor SSF of the ink was calculated by using the data of the recorded spectrum of an ink solution and comparing the maximum absorbance to the absorbance at a reference wavelength. The choice of this reference wavelength is dependent on the pigment(s) used:

- if the colour ink has a maximum absorbance $A_{max}$ between 400 and 500 nm then the absorbance $A_{ref}$ must be determined at a reference wavelength of 600 nm,
- If the colour ink has a maximum absorbance $A_{max}$ between 500 and 600 nm then the absorbance $A_{ref}$ must be determined at a reference wavelength of 650 nm,
- If the colour ink has a maximum absorbance $A_{max}$ between 600 and 700 nm then the absorbance $A_{ref}$ must be determined at a reference wavelength of 830 nm.

The absorbance was determined in transmission with a Shimadzu UV-2101 PC double beam-spectrophotometer. The ink was diluted to have a pigment concentration of 0.002%. In the case of a magenta ink, the ink was diluted to have a pigment concentration of 0.005%. A spectrophotometric measurement of the UV-VIS-NIR absorption spectrum of the diluted ink was performed in transmission-mode with a double beam-spectrophotometer using the settings of Table 3. Quartz cells with a path length of 10 mm were used and water was chosen as a blank.

**Table 3**

| Mode | Absorbance |
|---|---|
| Wavelength range | 240-900 nm |
| Slit width | 2.0 nm |
| Scan interval | 1.0 nm |
| Scan speed | Fast (1165 nm/min) |
| Detector | photo-multiplier(UV-VIS) |

Efficient pigmented inkjet inks exhibiting a narrow absorption spectrum and a high maximum absorbance have a value for SSF of at least 30.

2. Dispersion stability

The dispersion stability was evaluated by comparing the SSF before and after a heat treatment of one week at 80°C. Pigmented inkjet inks exhibiting good dispersion stability have a SSF after heat treatment still larger than 30.

3. Polymer analysis

Unless otherwise specified all polymers have been characterized with gel permeation chromatography (GPC) and nuclear magnetic resonance spectroscopy (NMR) using the following methods. Random or block copolymers were analyzed with NMR by dissolving them in a deuterated solvent. For $^1$H-NMR ± 20 mg polymer was dissolved in 0.8 mL $CDCl_3$ or DMSO-d6 or acetonitrile-d3 or $D_2O$ (with or without NaOD addition). Spectra were recorded on a Varian Inova 400 MHz instrument equipped with an ID-probe. For $^{13}$C-NMR ± 200 mg polymer was dissolved in 0.8 mL $CDCl_3$ or DMSO-d6 or acetonitrile-d3 or $D_2O$ (with or without NaOD addition). Spectra were recorded on a Varian Gemini2000 300 MHz equipped with a SW-probe.

Mn, Mw and polydispersity (PD) values were determined using gel permeation chromatography. For polymers dissolvable in organic solvents PL-mixed B columns (Polymer Laboratories Ltd) were used with THF+5% acetic acid as mobile phase using polystyrene with known molecular weights as calibration standards. These polymers were dissolved in the mobile phase at a concentration of 1mg/mL. For polymers dissolvable in water PL Aquagel OH-60, OH-50, OH-40 and/or OH-30 (Polymer Laboratories Ltd) column combinations were used depending on the molecular weight region of the polymers under investigation. As mobile phase water/methanol mixtures adjusted to pH 9.2 with e.g. disodiumhydrogen phosphate were used with or without the addition of neutral salts e.g. sodium nitrate. As calibration standards polyacrylic acids with known molecular weights were used. The polymers were dissolved in either water or water made basic with ammonium hydroxide at a concentration of 1 mg/mL. Refractive index detection was used.

An example is now given to illustrate the calculation of the average composition of a random (= statistical) copolymer P(MAA-c-EHA).
The Mn of the copolymer was determined with GPC to be 5000.
The molar percentage of each monomer type by NMR was determined to be: 45 mole% MAA and 55 mole% EHA.

Calculation:

$$(0.45 \times M_{MAA}) + (0.55 \times M_{EHA}) = 140.09$$

5000 / 140.09 = total number of monomeric units in average polymer chain = 36
Average number of MAA units = 0.45 x (5000/140.09) = 16 units
Average number of EHA units = 0.55 x (5000/140.09) = 20 units
Thus, the average composition is P($MAA_{16}$-c-$EHA_{20}$).

4. Particle size

The particle size of pigment particles in pigmented inkjet ink was determined by photon correlation spectroscopy at a wavelength of 633 nm with a 4mW HeNe laser on a diluted sample of the pigmented inkjet ink. The particle size analyzer used was a Malvern™ nano-S available from Goffin-Meyvis.

The sample was prepared by addition of one drop of ink to a cuvet containing 1.5 mL water and mixed until a homogenous sample was obtained. The measured particle size is the average value of 3 consecutive measurements consisting of 6 runs of 20 seconds. For good ink jet characteristics (jetting characteristics and print quality) the average particle size of the dispersed particles is preferably below 150 nm.

5. Calculation of %MW

The %MW is calculated as the ratio of the molecular weight of the pending chromophore group over the molecular weight of the colour pigment multiplied by 100.

EXAMPLE 1

This example illustrates that stable magenta inkjet inks can be prepared using a polymeric dispersant having a pending chromophore group. The polymeric backbone of the dispersant is a homopolymer, which is known to have poor dispersing capability.

Polymeric dispersant DISP-2

The polymeric dispersant DISP-2 was prepared by modifying VERSICOL E5 (DISP-1) through esterification with the chromophore MAG-1.

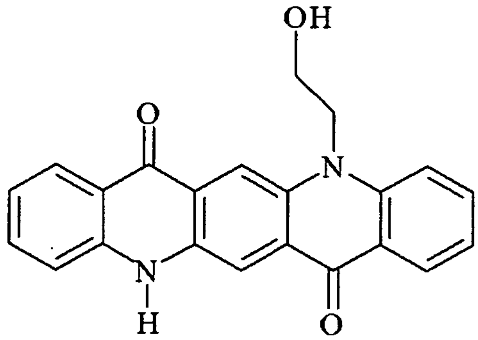

MAG-1

The resulting pending chromophore group PM-1 was linked by N* to the polymeric backbone through a linking group L containing an ester bond.

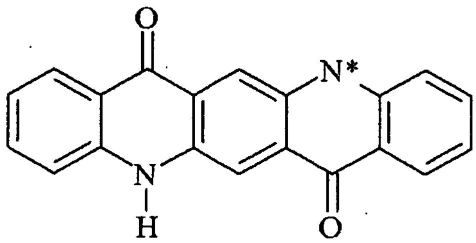

PM-1

Chromophore MAG-1

25 g (80 mmol) PV19 was suspended in 200 mL DMSO. 17.9 g (160 mmol) KOtBu was added and the suspension was heated to 70°C. 21.64 g (104 mmol) 2-(2-bromoethoxy)-tetrahydro-2H-pyran was added and the reaction was allowed to continue for 3 hours at 70°C. After cooling down to room temperature, 300 mL of water is added. The crude intermediate was isolated by filtration, washed with water and dried. The crude intermediate was suspended in 500 mL acetone. 8.0 mL HCl (conc.) was added and the reaction was allowed to continue for 1 hour at room temperature. N-hydroxyethyl-quinacridone was isolated by filtration, washed with aceton, resuspended in aceton, again isolated by filtration and dried. The crude product was used for polymer modification without further purification. The yield was 92 %.

Synthesis scheme of MAG-1:

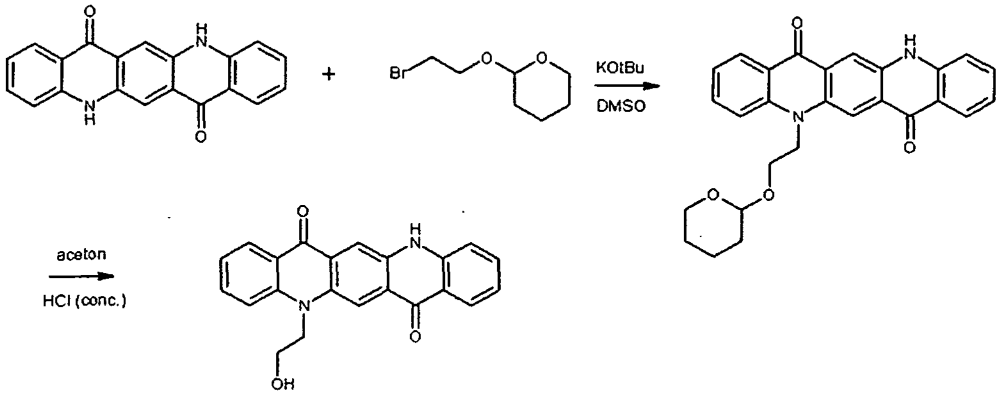


Synthesis of polymeric dispersant DISP-2

The reaction was performed in a three-necked round-bottomed flask that was equipped with a stirrer, a cooler and a bubble-counter on top. 2 g of the polyacrylic acid homopolymer (VERSICOL E5 as powder form) was introduced in the flask and dissolved in 40 mL of anhydrous dimethylacetamide (DMA). A slight flux of nitrogen was circulated through the flask. After (VERSICOL E5) was dissolved, 2.24 g of 1,1'-carbonyldiimidazole (CDI) was added and $CO_2$ evolution was observed. The reaction was further stirred at room temperature for 1 hour after which 1.97 g of the chromophore MAG-1 in combination with 84.5 mg of the catalyst dimethylaminopyridine (DMAP) were added. The heterogeneous mixture was stirred and heated to 80°C for 20 hours. The reaction mixture was cooled to room temperature and was treated by slowly adding 10 mL of a 2% v/v of acetic acid/water solution.
The heterogeneous mixture obtained was basified to pH 10 with NaOH and filtrated to remove remaining precipitates. The solution was dialyzed in water (Regenerated Cellulose Dialysis Membrane of MWCO of 1,000 Dalton - SPECTRA/POR™ 6) for two days and precipitates that appeared were filtered off again. The obtained solution was freeze-dried to give a reddish and fluffy powder. Yield of DISP-2 was 4.8 g.

Analytical results of DISP-2: GPC: Mn = 2698; Mw = 24843; PD = 9.21 (aqueous GPC; calibrated vs. PAA-standards)
Although that the desired modification did take place, the degree of substitution of DISP-11 with the chromophore MAG-1 could not be estimated by NMR.

<u>Preparation of inkjet ink</u>

The magenta inkjet inks were prepared in the same manner to obtain a composition as described in <u>Table 4,</u> except that different dispersants were used.

**Table 4**

| Component | Wt% |
|---|---|
| PR122 | 4.00 |
| Dispersant | 2.40 |
| 1,2-propanediol | 21.00 |
| Glycerol | 7.00 |
| Proxel™ Ultra 5 | 0.80 |
| Surfynol™ 104H | 0.09 |
| Water | 64.71 |

An ink composition was made by mixing the pigment, the dispersant and about half of the water with a dissolver and subsequently treating this mixture with a roller mill procedure using yttrium-stabilised zirconium oxide-beads of 0.4 mm diameter ("high wear resistant zirconia grinding media" from TOSOH Co.). A polyethylene flask of 60 mL was filled to half its volume with grinding beads and 20 g of the mixture. The flask was closed with a lit and put on the roller mill for three days. The speed was set at 150 rpm. After milling the dispersion was separated from the beads using a filter cloth. Under stirring, the surfactant Surfynol™ 104H and the biocide Proxel™ Ultra 5, glycerol, 1,2-propanediol and the

remaining water were added. This mixture was stirred for 10 minutes and filtered. The filtration was performed in two steps. First, the ink mixture is filtered using a (plastipak) syringe with a microfiber disposable filtercapsule with 1μm pore diameter (GF/B microfiber from Whatman Inc.) Then the same procedure is repeated on the filtrate. After the second filtration the ink is ready for evaluation.

Using the above method, the comparative inkjet ink COMP-1 and the inventive inkjet ink INV-1 were prepared according to Table 5.

**Table 5**

| Inkjet Ink | Polymeric Dispersant | Chromophore Group | Colour Pigment |
|---|---|---|---|
| COMP-1 | DISP-1 | None | PR122 |
| COMP-2 | DISP-1 | None | PV19 |
| INV-1 | DISP-2 | PM-1 | PR122 |
| INV-2 | DISP-2 | PM-1 | PV19 |

Results and evaluation

The spectral separation factor (SSF) was determined for each sample directly after preparation. The degree of modification with the chromophore MAG-1 could not be determined due to poor solubility. The results are listed in Table 6 together with the calculated values for the %MW.

**Table 6**

| Inkjet Ink | % Monomers with chromophore group | SSF | SSF 1 week 80°C |
|---|---|---|---|
| COMP-1 | 0 | 2 | 2 |
| COMP-2 | 0 | 2 | 1 |
| INV-1 | 20 (theoretically) | 53 | 45 |
| INV-2 | 20 (theoretically) | 90 | 78 |

From Table 6 it is clear that, although an homopolymer was used as the polymeric backbone for the dispersant, in the inventive pigmented inkjet inks INV-1 and INV-2 the pigments were dispersed exhibiting a high dispersion quality and stability. The SSF of the inventive magenta inkjet inksINV-1 and INV-2 were larger than 30 and therefore can be used to compose inkjet ink sets with high colour gamut.

## Claims

1. A pigment dispersion comprising a colour pigment represented by Formula (I)

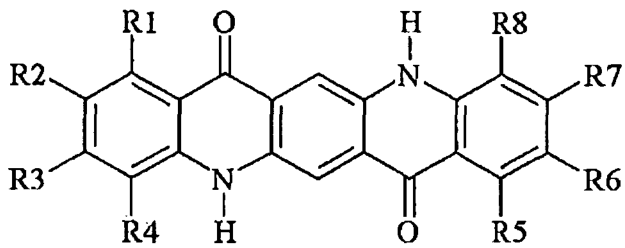

Formula (I)

wherein,
R1 to R8 are independently selected from the group consisting of hydrogen, an alkyl group and a halogen; and
a polymeric dispersant having via a linking group covalently linked to its polymeric backbone at least one pending

chromophore group wherein said at least one pending chromophore group is a chromophore group occurring as a side group on the polymeric backbone and not a group in the polymeric backbone itself or occurring solely as an end group of the polymeric backbone,
and said at least one pending chromophore group is represented by the Formula (II)

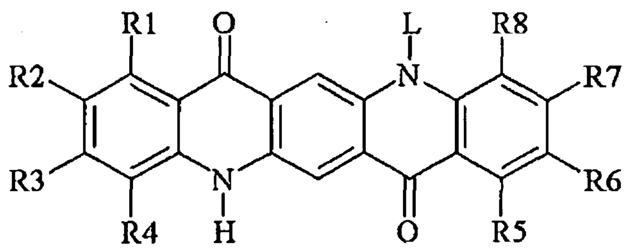

Formula (II)

wherein,
L is a linking group forming a covalent bond with said polymeric backbone; and
R1 to R8 are independently selected from the group consisting of hydrogen, an alkyl group and a halogen.

**2.** The pigment dispersion according to claim 1, wherein the polymeric backbone is a homopolymer comprising monomers selected from the group consisting of (meth)acrylic acid, MPEG (meth)acrylate, alkyl methacrylate, substituted alkyl meth(acrylate) and polyesters (meth)acrylate.

**3.** The pigment dispersion according to claim 1 or 2, wherein said chromophore group has a molecular weight that is smaller than 93% of the molecular weight of said colour pigment.

**4.** The pigment dispersion according to any of claims 1 to 4, wherein said linking group L contains at least one atom selected from the group consisting of an oxygen atom, a nitrogen atom and a sulphur atom.

**5.** The pigment dispersion according to any of claims 1 to 4, wherein said colour pigment is selected from the group consisting of C.I. Pigment Red 122, C.I. Pigment Red 192, C.I. Pigment Red 202, C.I. Pigment Red 207 and C.I. Pigment Red 209, C.I. Pigment Violet 19 and mixed crystals thereof.

**6.** The pigment dispersion according to any of claims 1 to 5, wherein said polymeric dispersant has a number average molecular weight Mn between 500 and 30000.

**7.** The pigment dispersion according to any of claims 1 to 6, wherein said pigment dispersion is an inkjet ink.

**8.** The pigment dispersion according to claim 7, wherein said inkjet ink is a curable inkjet ink.

**9.** The pigment dispersion according to any of claims 1 to 8, wherein the polymeric dispersant contains at least two pending chromophore groups in close proximity of each other on the polymeric backbone within less than 50 monomeric units.

**10.** The pigment dispersion according to any of claims 1 to 8, wherein the polymeric dispersant contains at least three pending chromophore groups in close proximity of each other on the polymeric backbone within less than 50 monomeric units.

**11.** The method for preparing a pigment dispersion comprising a colour pigment represented by Formula (I)

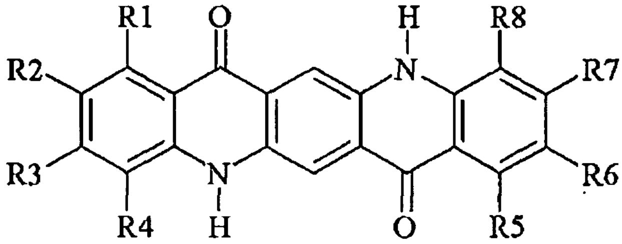

Formula (I)

wherein,
R1 to R8 are independently selected from the group consisting of hydrogen, an alkyl group and a halogen; and a polymeric dispersant having via a linking group covalently linked to its polymeric backbone at least one pending chromophore group wherein said at least one pending chromophore group is a chromophore group occurring as a side group on the polymeric backbone and not a group in the polymeric backbone itself or occurring solely as an end group of the polymeric backbone,
and said at least one pending chromophore group is represented by the Formula (II)

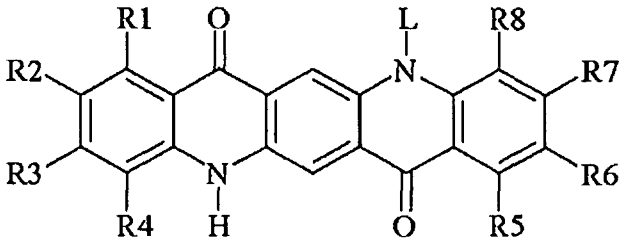

Formula (II)

wherein,
L is a linking group forming a covalent bond with said polymeric backbone; and
R1 to R8 are independently selected from the group consisting of hydrogen, an alkyl group and a halogen, comprising the step of preparing said polymeric dispersant by copolymerizing a monomer already containing the pending chromophore group.

**12.** The method for preparing the pigment dispersion according to claim 11 wherein the monomer already containing the chromophore group is represented by the general formula:

A-L-B

wherein,
A represents an ethylenically unsatured polymerisable functional group; L represents a divalent linking group; and B represents a substituted or unsubstituted quinacridone moiety.

**13.** The method for preparing the pigment dispersion according to claim 12 wherein said ethylenically unsatured polymerisable group is selected from the group consisting of a styrene, an acrylate, a methacrylate, an acrylamide, a methacrylamide, a maleimide, a vinyl ester and a vinyl ether.

**14.** The method for preparing a pigment dispersion comprising a colour pigment represented by Formula (I)

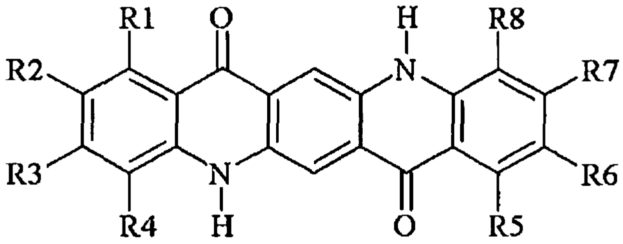

Formula (I)

wherein,
R1 to R8 are independently selected from the group consisting of hydrogen, an alkyl group and a halogen; and
a polymeric dispersant having via a linking group covalently linked to its polymeric backbone at least one pending chromophore group wherein said at least one pending chromophore group is a chromophore group occurring as a side group on the polymeric backbone and not a group in the polymeric backbone itself or occurring solely as an end group of the polymeric backbone,
and said at least one pending chromophore group is represented by the Formula (II)

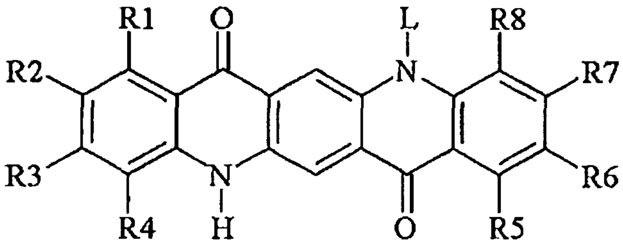

Formula (II)

wherein,
L is a linking group forming a covalent bond with said polymeric backbone; and
R1 to R8 are independently selected from the group consisting of hydrogen, an alkyl group and a halogen,
comprising the step of preparing said polymeric dispersant by a post-polymerization modification with a chromophore.

**15.** The method for preparing the pigment dispersion according to claim 14 wherein the post-polymerization modification is an esterification reaction.

**Patentansprüche**

**1.** Eine Pigmentdispersion, enthaltend ein Farbpigment gemäß Formel (I) :

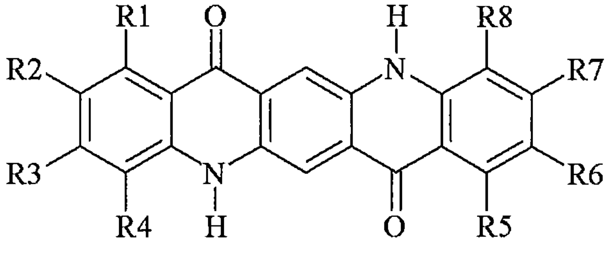

Formel (I)

in der :

R1 bis R8 unabhängig voneinander aus der Gruppe bestehend aus einem Wasserstoffatom, einer Alkylgruppe und einem Halogenatom gewählt werden, und
ein polymeres Dispersionsmittel, enthaltend mindestens eine seitenständige Chromophorgruppe, die über eine Verbindungsgruppe kovalent an die Polymer-Hauptkette des polymeren Dispersionsmittels gebunden ist, wobei die mindestens eine seitenständige Chromophorgruppe eine Chromophorgruppe ist, die als Seitengruppe auf der Polymer-Hauptkette vorliegt, und keine Gruppe in der Polymer-Hauptkette selbst ist oder die lediglich als Endgruppe der Polymer-Hauptkette vorliegt,
und wobei die mindestens eine seitenständige Chromophorgruppe der Formel (II) entspricht :

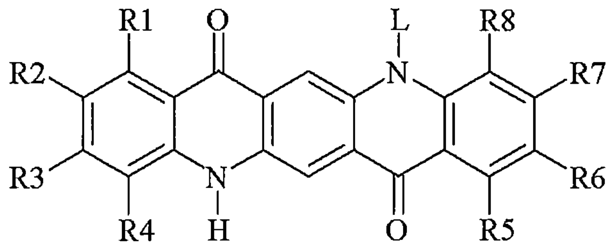

Formel (II)

in der :

L eine kovalente Bindung an die Polymer-Hauptkette bildende Verbindungsgruppe bedeutet, und
R1 bis R8 unabhängig voneinander aus der Gruppe bestehend aus einem Wasserstoffatom, einer Alkylgruppe und einem Halogenatom gewählt werden.

2. Pigmentdispersion nach Anspruch 1, **dadurch gekennzeichnet, dass** die Polymer-Hauptkette ein Homopolymer ist, das Monomere aus der Gruppe bestehend aus (Meth)acrylsäure, MPEG-(Meth)acrylat, Alkylmethacrylat, substituiertem Alkylmeth(acrylat) und Polyester(meth)acrylat enthält.

3. Pigmentdispersion nach Anspruch 1 oder 2, **dadurch gekennzeichnet, dass** das Molekulargewicht der Chromophorgruppe bei weniger als 93% des Molekulargewichts des Farbpigments liegt.

4. Pigmentdispersion nach einem der Ansprüche 1 bis 4, **dadurch gekennzeichnet, dass** die Verbindungsgruppe L mindestens ein Atom aus der Gruppe bestehend aus einem Sauerstoffatom, einem Stickstoffatom und einem Schwefelatom enthält.

5. Pigmentdispersion nach einem der Ansprüche 1 bis 4, **dadurch gekennzeichnet, dass** das Farbpigment aus der Gruppe bestehend aus C.I. Pigment Red 122, C.I. Pigment Red 192, C.I. Pigment Red 202, C.I. Pigment Red 207 und C.I. Pigment Red 209, C.I. Pigment Violet 19 und Mischkristallen dieser Pigmente gewählt wird.

6. Pigmentdispersion nach einem der Ansprüche 1 bis 5, **dadurch gekennzeichnet, dass** das polymere Dispersionsmittel ein zahlenmittleres Molekulargewicht Mn zwischen 500 und 30.000 hat.

7. Pigmentdispersion nach einem der Ansprüche 1 bis 6, **dadurch gekennzeichnet, dass** die Pigmentdispersion eine Tintenstrahltinte ist.

8. Pigmentdispersion nach Anspruch 7, **dadurch gekennzeichnet, dass** die Tintenstrahltinte eine härtbare Tintenstrahltinte ist.

9. Pigmentdispersion nach einem der Ansprüche 1 bis 8, **dadurch gekennzeichnet, dass** das polymere Dispersionsmittel mindestens zwei seitenständige Chromophorgruppen, die nahe aneinander mit weniger als 50 zwischenliegenden Monomereinheiten auf der Polymer-Hauptkette vorliegen, enthält.

**10.** Pigmentdispersion nach einem der Ansprüche 1 bis 8, **dadurch gekennzeichnet, dass** das polymere Dispersionsmittel mindestens drei seitenständige Chromophorgruppen, die nahe aneinander mit weniger als 50 zwischenliegenden Monomereinheiten auf der Polymer-Hauptkette vorliegen, enthält.

**11.** Verfahren zur Herstellung einer Pigmentdispersion, enthaltend ein Farbpigment der Formel (I) :

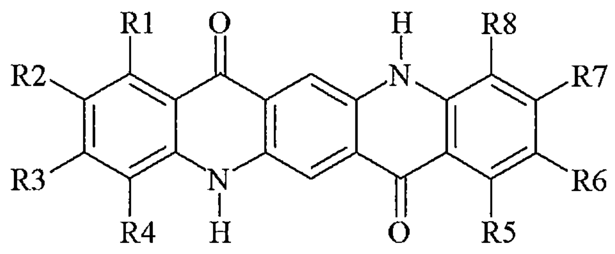

Formel (I)

in der :

R1 bis R8 unabhängig voneinander aus der Gruppe bestehend aus einem Wasserstoffatom, einer Alkylgruppe und einem Halogenatom gewählt werden, und
ein polymeres Dispersionsmittel, enthaltend mindestens eine seitenständige Chromophorgruppe, die über eine Verbindungsgruppe kovalent an die Polymer-Hauptkette des polymeren Dispersionsmittels gebunden ist, wobei die mindestens eine seitenständige Chromophorgruppe eine Chromophorgruppe ist, die als Seitengruppe auf der Polymer-Hauptkette vorliegt, und keine Gruppe in der Polymer-Hauptkette selbst ist oder die lediglich als Endgruppe der Polymer-Hauptkette vorliegt,
und wobei die mindestens eine seitenständige Chromophorgruppe der Formel (II) entspricht :

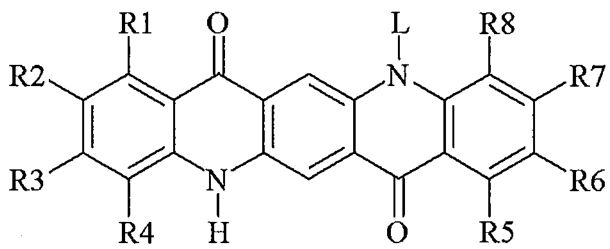

Formel (II)

in der :

L eine kovalente Bindung an die Polymer-Hauptkette bildende Verbindungsgruppe bedeutet, und
R1 bis R8 unabhängig voneinander aus der Gruppe bestehend aus einem Wasserstoffatom, einer Alkylgruppe und einem Halogenatom gewählt werden,
umfassend den Schritt, in dem das polymere Dispersionsmittel durch Copolymerisieren eines die seitenständige Chromophorgruppe bereits enthaltenden Monomers hergestellt werd.

**12.** Verfahren zur Herstellung der Pigmentdispersion nach Anspruch 11, **dadurch gekennzeichnet, dass** das die Chromophorgruppe bereits enthaltende Monomer folgender allgemeiner Formel entspricht :

A-L-B

in der :

A eine ethylenisch ungesättigte polymerisierbare funktionelle Gruppe bedeutet,
L eine divalente Verbindungsgruppe bedeutet und
B eine gegebenenfalls substituierte funktionelle Chinacridongruppe bedeutet.

**13.** Verfahren zur Herstellung der Pigmentdispersion nach Anspruch 12, **dadurch gekennzeichnet, dass** die ethylenisch ungesättigte polymerisierbare Gruppe aus der Gruppe bestehend aus einem Styrol, einem Acrylat, einem Methacrylat, einem Acrylamid, einem Methacrylamid, einem Maleimid, einem Vinylester und einem Vinylether gewählt wird.

**14.** Verfahren zur Herstellung einer Pigmentdispersion, enthaltend ein Farbpigment der Formel (I) :

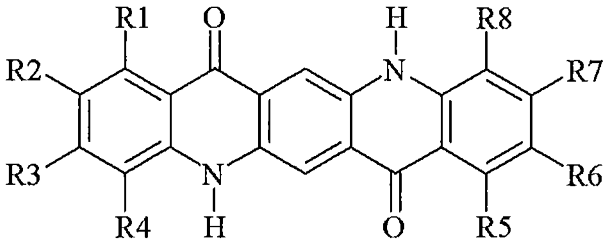

Formel (I)

in der :

R1 bis R8 unabhängig voneinander aus der Gruppe bestehend aus einem Wasserstoffatom, einer Alkylgruppe und einem Halogenatom gewählt werden, und
ein polymeres Dispersionsmittel, enthaltend mindestens eine seitenständige Chromophorgruppe, die über eine Verbindungsgruppe kovalent an die Polymer-Hauptkette des polymeren Dispersionsmittels gebunden ist, wobei die mindestens eine seitenständige Chromophorgruppe eine Chromophorgruppe ist, die als Seitengruppe auf der Polymer-Hauptkette vorliegt, und keine Gruppe in der Polymer-Hauptkette selbst ist oder die lediglich als Endgruppe der Polymer-Hauptkette vorliegt,
und wobei die mindestens eine seitenständige Chromophorgruppe der Formel (II) entspricht :

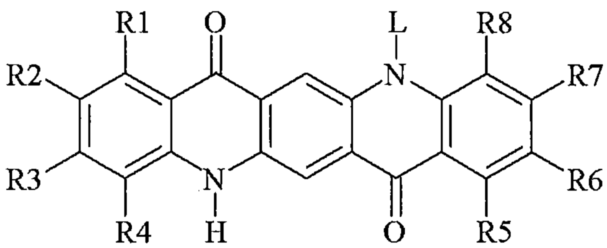

Formel (II)

in der :

L eine kovalente Bindung an die Polymer-Hauptkette bildende Verbindungsgruppe bedeutet, und
R1 bis R8 unabhängig voneinander aus der Gruppe bestehend aus einem Wasserstoffatom, einer Alkylgruppe und einem Halogenatom gewählt werden,
umfassend den Schritt, in dem das polymere Dispersionsmittel dadurch hergestellt wird, dass anschließend an die Polymerisation eine Modifikation mit einem Chromophor vorgenommen wird.

**15.** Verfahren zur Herstellung der Pigmentdispersion nach Anspruch 14, **dadurch gekennzeichnet, dass** die Postpolymerisationsmodifikation eine Veresterungsreaktion ist.

**Revendications**

1. Une dispersion de pigment contenant un pigment coloré répondant à la Formule (I) :

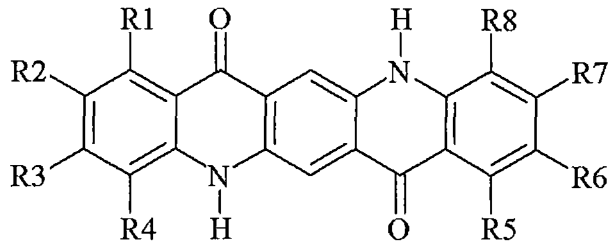

Formule (I)

où :

R1 à R8 sont choisis, indépendamment l'un de l'autre, parmi le groupe composé d'un atome d'hydrogène, d'un groupe alkyle et d'un atome d'halogène, et
un dispersant polymère comprenant au moins un groupe chromophore latéral lié par covalence, par le biais d'un groupe de liaison, à la chaîne principale du polymère du dispersant polymère, où ledit au moins un groupe chromophore latéral est un groupe chromophore qui se trouve comme groupe latéral sur la chaîne principale du polymère et qui n'est pas un groupe dans la chaîne principale du polymère elle-même ou qui est uniquement présent comme groupe terminal de la chaîne principale du polymère,
ledit au moins un groupe chromophore latéral répondant à la Formule (II) :

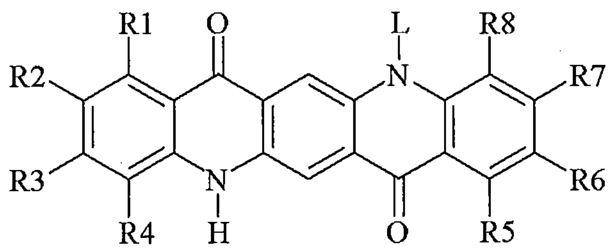

Formule (II)

où :

L représente un groupe de liaison formant une liaison covalente à la chaîne principale du polymère, et
R1 à R8 sont choisis, indépendamment l'un de l'autre, parmi le groupe composé d'un atome d'hydrogène, d'un groupe alkyle et d'un atome d'halogène.

2. Dispersion de pigment selon la revendication 1, **caractérisée en ce que** la chaîne principale du polymère est un homopolymère comprenant des monomères choisis parmi le groupe composé d'acide (méth)acrylique, de (méth) acrylate de MPEG, de méthacrylate d'alkyle, de méthacrylate d'alkyle substitué et de (méth)acrylate de polyester.

3. Dispersion de pigment selon la revendication 1 ou 2, **caractérisée en ce que** le groupe chromophore présente un poids moléculaire inférieur à 93% du poids moléculaire du pigment coloré.

4. Dispersion de pigment selon l'une quelconque des revendications 1 à 4, **caractérisée en ce que** le groupe de

liaison L contient au moins un atome choisi parmi le groupe composé d'un atome d'oxygène, d'un atome d'azote et d'un atome de soufre.

5. Dispersion de pigment selon l'une quelconque des revendications 1 à 4, **caractérisée en ce que** le pigment coloré est choisi parmi le groupe composé de C.I. Pigment Red 122, C.I. Pigment Red 192, C.I. Pigment Red 202, C.I. Pigment Red 207 et C.I. Pigment Red 209, C.I. Pigment Violet 19 et de cristaux mixtes desdits pigments.

6. Dispersion de pigment selon l'une quelconque des revendications 1 à 5, **caractérisée en ce que** le dispersant polymère présente un poids moléculaire moyen en nombre Mn compris entre 500 et 30.000.

7. Dispersion de pigment selon l'une quelconque des revendications 1 à 6, **caractérisée en ce que** la dispersion de pigment est une encre pour impression à jet d'encre.

8. Dispersion de pigment selon la revendication 7, **caractérisée en ce que** l'encre pour impression à jet d'encre est une encre pour impression à jet d'encre durcissable.

9. Dispersion de pigment selon l'une quelconque des revendications 1 à 8, **caractérisée en ce que** le dispersant polymère comprend au moins deux groupes chromophores latéraux situés près l'un de l'autre, c'est-à-dire avec moins de 50 unités monomères entre eux, sur la chaîne principale du polymère.

10. Dispersion de pigment selon l'une quelconque des revendications 1 à 8, **caractérisée en ce que** le dispersant polymère comprend au moins trois groupes chromophores latéraux situés près l'un de l'autre, c'est-à-dire avec moins de 50 unités monomères entre eux, sur la chaîne principale du polymère.

11. Procédé pour la préparation d'une dispersion de pigment contenant un pigment coloré répondant à la Formule (I) :

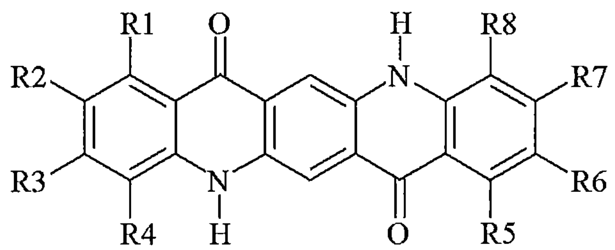

Formule (I)

où :

R1 à R8 sont choisis, indépendamment l'un de l'autre, parmi le groupe composé d'un atome d'hydrogène, d'un groupe alkyle et d'un atome d'halogène, et

un dispersant polymère comprenant au moins un groupe chromophore latéral lié par covalence, par le biais d'un groupe de liaison, à la chaîne principale du polymère du dispersant polymère, où ledit au moins un groupe chromophore latéral est un groupe chromophore qui se trouve comme groupe latéral sur la chaîne principale du polymère et qui n'est pas un groupe dans la chaîne principale du polymère elle-même ou qui est uniquement présent comme groupe terminal de la chaîne principale du polymère,

ledit au moins un groupe chromophore latéral répondant à la Formule (II) :

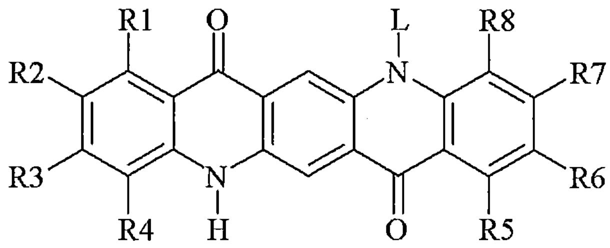

Formule (II)

où :

L représente un groupe de liaison formant une liaison covalente à la chaîne principale du polymère, et
R1 à R8 sont choisis, indépendamment l'un de l'autre, parmi le groupe composé d'un atome d'hydrogène, d'un groupe alkyle et d'un atome d'halogène,
comprenant l'étape consistant à préparer le dispersant polymère par copolymérisation d'un monomère qui comprend déjà le groupe chromophore latéral.

12. Procédé pour la préparation de la dispersion de pigment selon la revendication 11, **caractérisé en ce que** le monomère comprenant déjà le groupe chromophore répond à la formule générale reprise ci-après :

A-L-B

où :

A représente un groupe fonctionnel polymérisable éthyléniquement insaturé,
L représente un groupe de liaison divalent et
B représente un groupe quinacridone fonctionnel éventuellement substitué.

13. Procédé pour la préparation de la dispersion de pigment selon la revendication 12, **caractérisé en ce que** le groupe polymérisable éthyléniquement insaturé est choisi parmi le groupe composé d'un styrène, d'un acrylate, d'un méthacrylate, d'un acrylamide, d'un méthacrylamide, d'un maléimide, d'un ester vinylique et d'un éther vinylique.

14. Procédé pour la préparation d'une dispersion de pigment contenant un pigment coloré répondant à la Formule (I) :

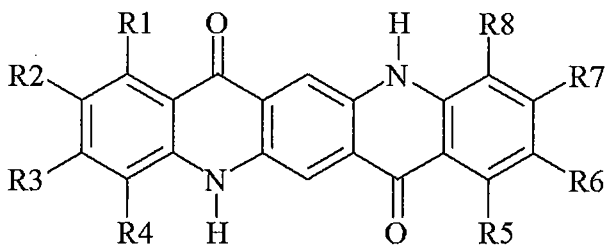

Formule (I)

où :

R1 à R8 sont choisis, indépendamment l'un de l'autre, parmi le groupe composé d'un atome d'hydrogène, d'un groupe alkyle et d'un atome d'halogène, et
un dispersant polymère comprenant au moins un groupe chromophore latéral lié par covalence, par le biais d'un groupe de liaison, à la chaîne principale du polymère du dispersant polymère, où ledit au moins un groupe chromophore latéral est un groupe chromophore qui se trouve comme groupe latéral sur la chaîne principale

du polymère et qui n'est pas un groupe dans la chaîne principale du polymère elle-même ou qui est uniquement présent comme groupe terminal de la chaîne principale du polymère,
ledit au moins un groupe chromophore latéral répondant à la Formule (II) :

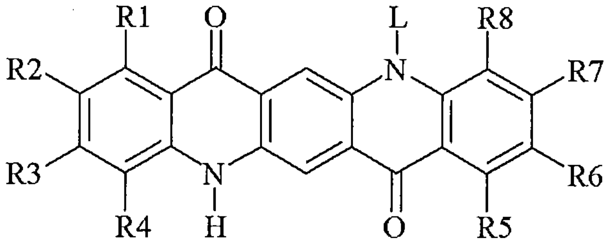

Formule (II)

où :

L représente un groupe de liaison formant une liaison covalente à la chaîne principale du polymère, et
R1 à R8 sont choisis, indépendamment l'un de l'autre, parmi le groupe composé d'un atome d'hydrogène, d'un groupe alkyle et d'un atome d'halogène,
comprenant l'étape consistant à préparer le dispersant polymère en effectuant une modification de post-polymérisation avec un chromophore.

**15.** Procédé pour la préparation de la dispersion de pigment selon la revendication 14, **caractérisé en ce que** la modification de post-polymérisation est une réaction d'estérification.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- CA 2157361, DU PONT
- US 5859113 A, DU PONT
- EP 0763580 A
- EP 0763378 A
- US 5420187 A
- US 2003044707 A
- US 2004194665 A
- WO 2005056692 A


### Non-patent literature cited in the description


- **MATYJASZEWSKI, K. et al.** Atom Transfer Radical Polymerization. *Chem. Reviews,* 2001, vol. 101, 2921-2990
- Polymer Handbook. Wiley-Interscience, 1999, vol. 1 + 2
- **HERBST, WILLY et al.** Industrial Organic Pigments, Production, Properties, Applications. Wiley - VCH, 2004